# EUROPÄISCHE PATENTSCHRIFT

(11) **EP 0 516 005 B1**
(45) Veröffentlichungstag und Bekanntmachung des Hinweises auf die Patenterteilung: **04.10.1995**
(21) Anmeldenummer: 92108724.3
(22) Anmeldetag: 23.05.1992
(51) Int. Cl.: A01B 61/04

(54) **Pflug mit einer Grindel-Überlastsicherung**
Plough with an overload safety device for plough legs
Charrue comportant un dispositif de sécurité pour l'age

(30) Priorität: 31.05.1991 DE 4117949
(43) Veröffentlichungstag der Anmeldung: 02.12.1992
(73) Patentinhaber: BBG Bodenbearbeitungsgeräte Leipzig GmbH, D-04249 Leipzig (DE)
(72) Erfinder: Schwope, Reinhard, O-4201 Wallendorf (DE); Uhlig, Konrad, O-7024 Leipzig (DE); Sosnicki, Jürgen, O-7063 Leipzig (DE)
(74) Vertreter: Rehberg, Elmar, Dipl.-Ing.

(56) Entgegenhaltungen:
- EP-A- 0 037 848
- EP-A- 0 229 484
- FR-A- 2 301 165

## Beschreibung

Die Erfindung betrifft einen Pflug mit einer Grindel-Überlastsicherung, bei dem der Grindel rohrförmig ausgebildet ist und ein darin angeordneter Arbeitsspeicher vorgesehen ist, mit einem zwischen Pflugrahmen und Grindel angelenkten Kniehebelsystem und Bauelementen zur Kraftübertragung vom Arbeitsspeicher auf ein Kniegelenk, wobei das Kniegelenk aus zwei Kniehebelarmen und einem Kniegelenkbolzen besteht, und mit einem Anschlag, der die Auslenkung des Grindels nach unten begrenzt sowie mit einer Einstellvorrichtung für das Kniehebelsystem.

Mit dem EP 37 848 ist ein solcher Pflug bekannt. Bei dieser Lösung erfolgt das Ausheben und Einsetzen des Pflugkörpers mittels einer im rohrförmigen Grindel angeordneten Druckfeder, welche durch ein Kniehebelsystem am Pflugrahmen abgestützt wird. Die Anordnung der Kniehebelarme zwischen Grindel und Pflugrahmen ermöglicht es zwar, die Druckfeder im wesentlichen in Längsrichtung des Grindels zu beaufschlagen, jedoch liegt der Anlenkpunkt der Druckfeder auf einer vertikalen Kreisbahn. Deshalb kann es beim Ausheben des Pflugkörpers zum Verkanten der Druckfeder im Grindel kommen.

Die Übertragung der Druckkräfte von der Feder auf das Kniehebelsystem mit Hilfe des zweiarmigen Hebels und dessen Auslenkung nach unten führt dazu, daß sich die Überlastsicherung gemäß EP 37 848 nicht für eine Nutzung bei Drehpflügen eignet.

Bedingt durch die Anordnung des Kniehebels liegt die volle Abstützkraft der Druckfeder nicht nur in Arbeits-, sondern auch in Transportstellung des Pflugkörpers am Kniehebelsystem an. Aus diesem Grund ist zur Fixierung der Transportstellung des Pflugkörpers eine mit dem Pflugrahmen verbundene verstellbare Auflage unterhalb des Grindels angeordnet, da dieser sonst nach unten ausgelenkt würde. Damit verringert sich der Freiraum zwischen Grindel und Pflugkörper wesentlich, so daß sowohl die Anbringung von Vorarbeitswerkzeugen als auch Montage- und Wartungsarbeiten erschwert werden. Außerdem wird der Erdfluß und der Durchgang von Oberflächenbewuchs oder -belag negativ beeinflußt.

Das Kniehebelsystem weist an seiner Verbindungsstelle mit dem Pflugrahmen eine Vorrichtung zur Einstellung der Auslösekraft für die Überlastsicherung auf, was den Bauaufwand zusätzlich erhöht.

Bei Drehpflügen ist es üblich, den Grindel in einer Ebene mit seinem Schwenkgelenk anzuordnen, um oberhalb bzw. unterhalb des Grindels einen Freiraum zu erhalten. Die genannte Grindel-Überlastsicherung des Standes der Technik, bei der das Schwenkgelenk des Grindels unterhalb des Pflugrahmens angeordnet ist, kann aber nicht für Drehpflüge, sondern nur für Beetpflüge eingesetzt werden.

Aufgabe der Erfindung ist es daher, einen Pflug mit einer kompakten und funktionssicheren Grindel-Überlastsicherung zu schaffen.

Diese Aufgabe wird dadurch gelöst, daß sowohl das Schwenkgelenk des Grindels am Pflugrahmen als auch der Grindel in einer gemeinsamen horizontalen Ebene angeordnet sind, daß das Kniegelenk des Kniehebelsystems in Richtung des Grindels ausschwenkbar ausgebildet ist, daß der Grindel auf seiner dem Pflugrahmen zugewandten Seite einen Grindelkopf aufweist, daß am Grindel eine Halteund Stellvorrichtung auf der dem Grindel abgewandten Seite des am Grindelkopf drehbar gelagerten hinteren Kniehebelarms des Kniehebelsystems vorgesehen ist, und daß ein Kraftübertragungselement zwischen dem Kniegelenkbolzen und einem am Arbeitsspeicher im Grindel gelagerten Druckbolzen angeordnet ist.

Das Kniehebelsystem besteht aus zwei paarweise nebeneinander angeordneten vorderen und zwei ebenso angeordneten hinteren Kniehebelarmen, die mittels des Kniegelenkbolzens kettengliedartig miteinander verbunden sind.

Die Halte- und Stellvorrichtung besteht aus einer am Grindelkopf befestigten Einstellschraube und einem am hinteren Kniehebelarm angeordneten Anschlag, an dem die Einstellschraube in Arbeitsstellung anliegt. Am Grindelkopf ist eine Abdeckung für die beweglichen Teile der Überlastsicherung angeordnet.

In einer ersten Ausgestaltungsform der Erfindung ist zwischen dem Kniegelenkbolzen und dem Druckbolzen eine um einen Bolzen am Grindelkopf pendelnd gelagerte Druckplatte angeordnet. Die Druckplatte verfügt über zwei sich etwa gegenüberliegende Führungsbahnen, an denen jeweils der Kniegelenkbolzen bzw. der Druckbolzen kraftschlüssig anliegen. Beide Seiten des Grindels weisen jeweils ein Führungslangloch zur Aufnahme des Druckbolzens auf.

In einer zweiten Ausgestaltungsform der Erfindung ist das zwischen Kniegelenkbolzen und Druckbolzen angeordnete Kraftübertragungselement als Druckstrebe formschlüssig ausgebildet. Im Grindel ist zwischen dem Druckbolzen und dem Arbeitsspeicher ein Wagen mit Rollen angeordnet. Beim Beetpflug ist die Druckstrebe mit einer nach hinten offenen Tasche versehen, in welcher der Druckbolzen gelagert ist.

In Arbeitsstellung wird der Pflugkörper mittels des Kniehebelsystems in seiner unteren Endstellung gehalten. Da der hintere Kniehebelarm auch in der Transportstellung an der am Grindel befestigten Einstellschraube anliegt, stützt sich die Kraft des Arbeitsspeichers dort ab. Somit hängt der Grindel nur mit seinem Eigengewicht und der Kraft des Arbeitsspeichers am Kniehebelsystem und dem Schwenkgelenk des Grindels, was einen speziellen Anschlag unterhalb des Grindels zu dessen Fixierung in Arbeitsstellung überflüssig macht. Die Justierung des Kniehebels bzw. des Grindels in seiner Nullstellung erfolgt ebenfalls mit der Einstellschraube. Vorteilhaft erweist sich dabei deren Anordnung oberhalb des Anschlages am hinteren Kniehebelarm, da auf diese Weise kein zusätzlicher Bauraum am Grindel benötigt wird.

Trifft der Pflugkörper auf ein Hindernis, so bewegt sich der Grindel um sein Schwenkgelenk nach oben. Gleichzeitig wird der Kniegelenkbolzen durch die Wirkung der vorderen Kniehebelarme auf einer von den hinteren Kniehebelarmen vorgegebenen Bahn nach hinten bewegt.

In der ersten Ausgestaltungsform der Erfindung wird dabei die Druckplatte nach hinten gedrückt und verschiebt den Druckbolzen ebenfalls nach hinten. Auf diese Weise wird der vorgespannte Arbeitsspeicher weiter zusammengedrückt.

In der zweiten Ausgestaltungsform der Erfindung werden die vorderen Kniehebelarme nach hinten gedrückt und verschieben über den Druckbolzen den Wagen nach hinten. Somit wird der vorgespannte Arbeitsspeicher ebenfalls aufgeladen.

Nach Überwinden des Hindernisses drückt der Arbeitsspeicher das jeweilige Kraftübertragungselement und damit das Kniehebelsystem in seine Ausgangslage zurück, so daß der Pflugkörper erneut seine Arbeitsstellung erreicht.

Infolge der Kraftübertragung zwischen Arbeitsspeicher und Druckbolzen mittels des auf Rollen gelagerten Wagens, ist bei der zweiten Variante der Erfindung eine im Gegensatz zur Gleitreibung geringere Rollreibung im Grindel zu verzeichnen, die das Wiedereinziehen des Pflugkörpers in den Boden wesentlich erleichtert.

Beim Drehpflug sind grundsätzlich alle Bauteile der Überlastsicherung, die beim Beetpflug oberhalb der horizontalen Ebene durch das Grindelschwenkgelenk angebracht sind, doppelt und spiegelbildlich zu dieser horizontalen Ebene angeordnet.

Die vorderen Kniehebelarme weisen beim Drehpflug jeweils ein Langloch zur Aufnahme des Gelenkbolzens am Pflugrahmen und die Druckstreben jeweils ein Langloch zur Aufnahme des Druckbolzens auf.

Die Funktion der Überlastsicherung beim Drehpflug ist somit im Prinzip analog der beim Beetpflug. Lediglich die Beaufschlagung der Kniehebelsysteme ist unterschiedlich. Während das obere Kniehebelsystem für das Aufbringen des erforderlichen Arbeitswiderstandes verantwortlich ist, wird das jeweils untere Kniehebelsystem für die notwendige waagerechte Lage des Grindels, d. h. die Einhaltung der Arbeitsstellung verwendet.

Bei einer Auslenkung von Pflugkörper und Grindel infolge eines Hindernisses wird beim Drehpflug der Gelenkbolzen der vorderen Kniehebelarme des oberen Kniehebelsystems in seine hintere Endlage in den Langlöchern gedrückt, währenddessen der Gelenkbolzen der vorderen Kniehebelarme des unteren Kniehebelsystems je nach Intensität der Auslenkung des Grindels in Richtung seiner vorderen Endlage in den Langlöchern gleitet. Auf diese Weise wird das untere Kniehebelsystem gegenüber seiner Lage in Arbeitsstellung gestreckt und ermöglicht so die Abstandsvergrößerung des Druckbolzens vom Schwenkgelenk des Grindels und damit dessen Auslenkung.

Bei der zweiten Ausgestaltungsform der Erfindung, der formschlüssigen Verbindung von Druckstrebe und Druckbolzen, wird eine weitere Vergrößerung der möglichen Auslenkung des Grindels durch Anordnung des Druckbolzens in einem Langloch der Druckstrebe erreicht.

Die in der ersten Ausgestaltungsform der Erfindung im Grindel bestehende kraftschlüssige Verbindung zwischen der Druckplatte und dem Druckbolzen ermöglicht eine relativ einfache Montage der Überlastsicherung. Dazu wird der Arbeitsspeicher von hinten und die Druckplatte von vorn in den Grindel eingeführt, bis sie am Druckbolzen anliegen. Dieser besondere Vorteil der erfindungsgemäßen Lösung wird auch in der zweiten Ausgestaltungsform durch die beim Beetpflug nach hinten offene Tasche der Druckstrebe gewährleistet.

Im Folgenden sind zwei Ausführungsbeispiele der Erfindung naher erläutert und in den Zeichnungen dargestellt. Dabei zeigen:
- Fig. 1:: Seitenansicht einer erfindungsgemäßen Überlastsicherung für Drehpflüge, in Arbeitsstellung
- Fig. 2:: Seitenansicht entsprechend Fig. 1, in ausgelenkter Stellung
- Fig. 3:: Seitenansicht einer erfindungsgemäßen Überlastsicherung für Beetpflüge, in Arbeitsstellung
- Fig. 4:: Vergrößerte Einzelheit der Überlastsicherung, entsprechend Fig. 3
- Fig. 5:: Seitenansicht der zweiten Ausgestaltungsform der erfindungsgemäßen Überlastsicherung für Drehpflüge, in Arbeitsstellung
- Fig. 6:: Seitenansicht entsprechend Fig. 5, in ausgelenkter Stellung
- Fig. 7:: Seitenansicht der Überlastsicherung entsprechend Fig. 5, jedoch für Beetpflüge

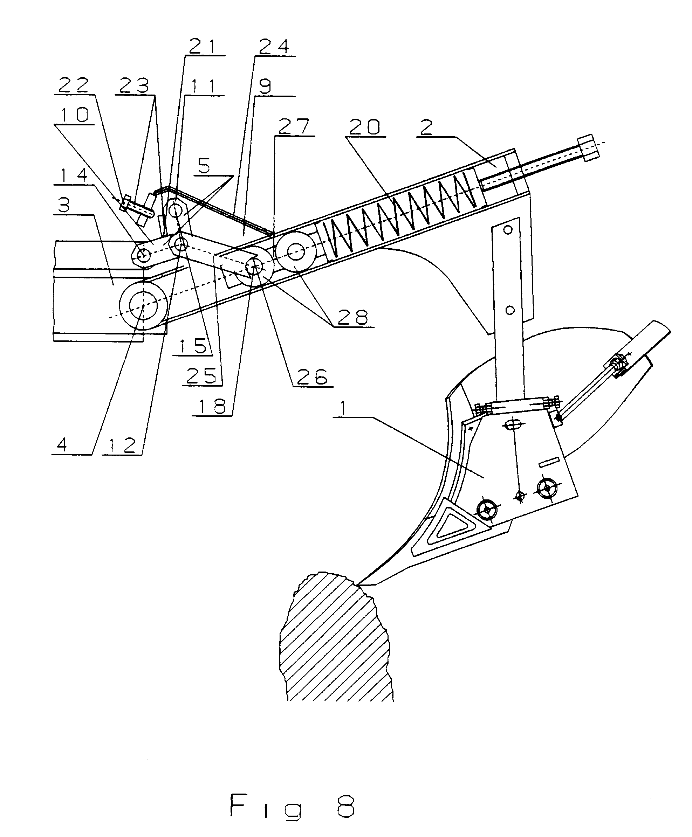

- Fig. 8:: Seitenansicht entsprechend Fig. 7, in ausgelenkter Stellung
Der Pflugkörper 1 ist mit dem Grindel 2 am Pflugrahmen 3 im Schwenkgelenk 4 gelagert. Grindel 2 und Pflugkörper 1 sind gegen den Pflugrahmen 3 durch ein Kniehebelsystem 5 und ein als Druckplatte 6 ausgebildetes Kraftübertragungselement 7 gelenkig abgestützt. Die Druckplatte 6 ist mit dem Bolzen 8 pendelnd am Grindelkopf 9 gelagert. Das Kniehebelsystem 5 besteht aus zwei Kniehebelarmen 10, 11 und einem Kniegelenk 12. Dabei sind jeweils zwei parallel nebeneinander angeordnete vordere bzw. hintere Kniehebelarme 10, 11 mittels eines Kniegelenkbolzens 13 kettengliedartig miteinander verbunden. Die vorderen Kniehebelarme 10 sind mittels eines Gelenkbolzens 14 am Pflugrahmen 3 und die hinteren Kniehebelarme 11 mittels eines Gelenkbolzens 15 am Grindelkopf 9 angelenkt.

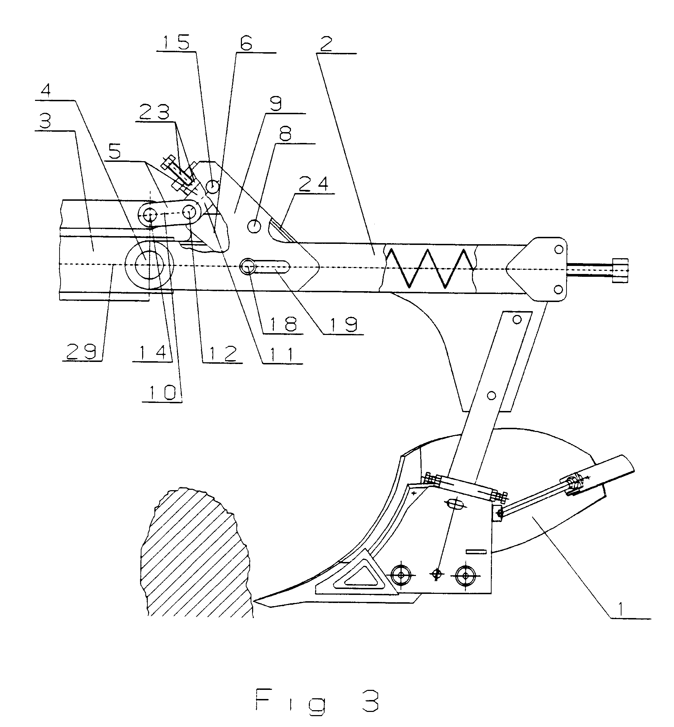

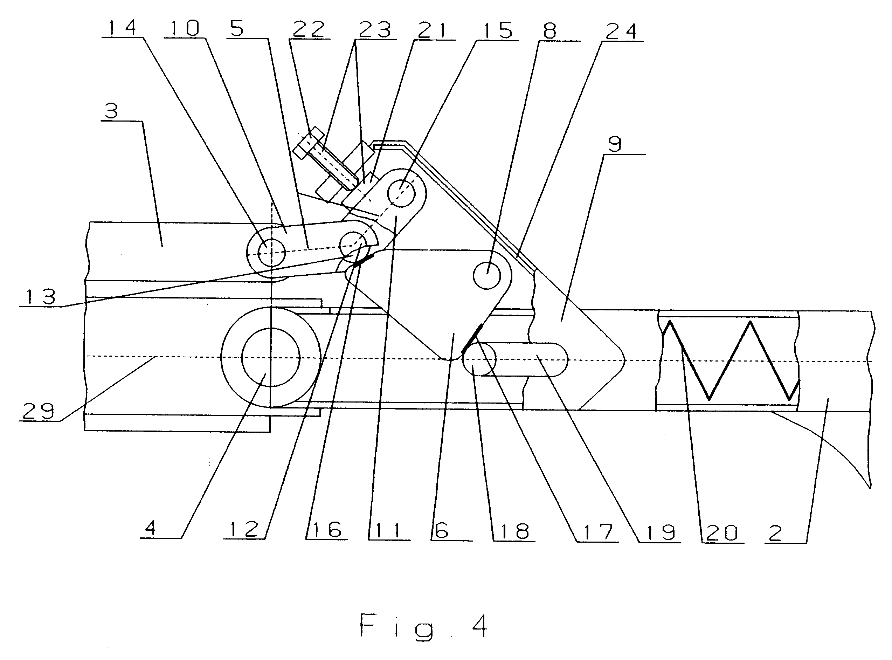

Am Kniegelenkbolzen 13 liegt die als Abrollfläche ausgebildete Führungsbahn 16 der Druckplatte 6 an. Die andere Seite der Druckplatte 6 wird an ihrer als Abstützfläche ausgebildeten Führungsbahn 17 vom Druckbolzen 18 gehalten. Dieser befindet sich in zwei seitlich im Grindel 2 ausgebildeten Führungslanglöchern 19 und wird vom als Druckfeder ausgebildeten Arbeitsspeicher 20 belastet (Fig. 3, 4).

Auf der vom Grindel 2 abgewendeten Seite der am Grindelkopf 9 drehbar gelagerten hinteren Kniehebelarme 11, d. h. beim Beetpflug oberhalb dieser Kniehebelarme 11 ist ein Anschlag 21 und am Grindelkopf 9 eine Einstellschraube 22 angeordnet. Der Anschlag 21 und die auf ihn wirkende Einstellschraube 22 bilden gemeinsam die Halte- und Stellvorrichtung 23.

Am Grindelkopf 9 ist eine Abdeckung 24 für die beweglichen Teile der Überlastsicherung angeordnet.

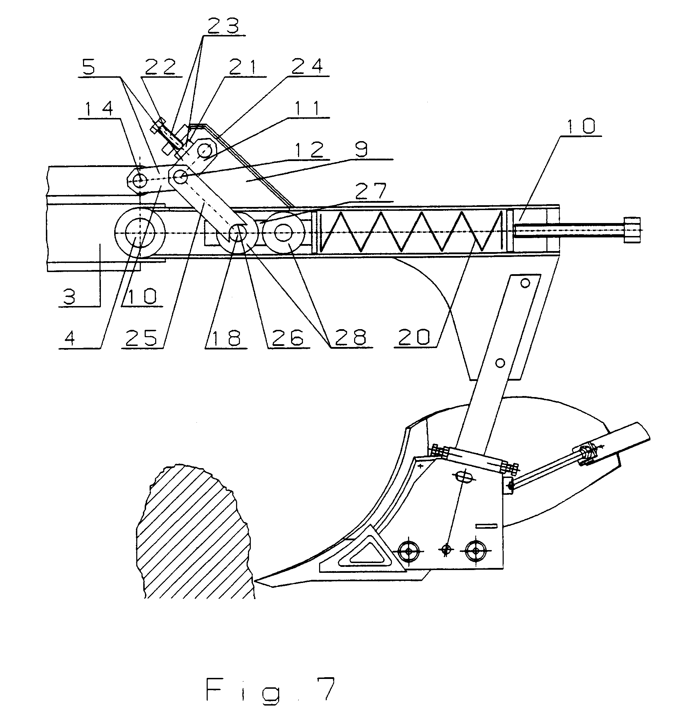

In einem zweiten Ausführungsbeispiel ist das Kraftübertragungselement 7 als Druckstrebe 25 ausgebildet, welche formschlüssig zwischen Kniegelenkbolzen 13 und Druckbolzen 18 angeordnet ist. Am hinteren Ende der Druckstrebe 25 ist eine Tasche 26 ausgebildet, die den Druckbolzen 18 aufnimmt. Zusätzlich ist im Grindel 2 zwischen dem Druckbolzen 18 und der Druckfeder 20 ein Wagen 27 mit Rollen 28 angeordnet (Fig. 7).

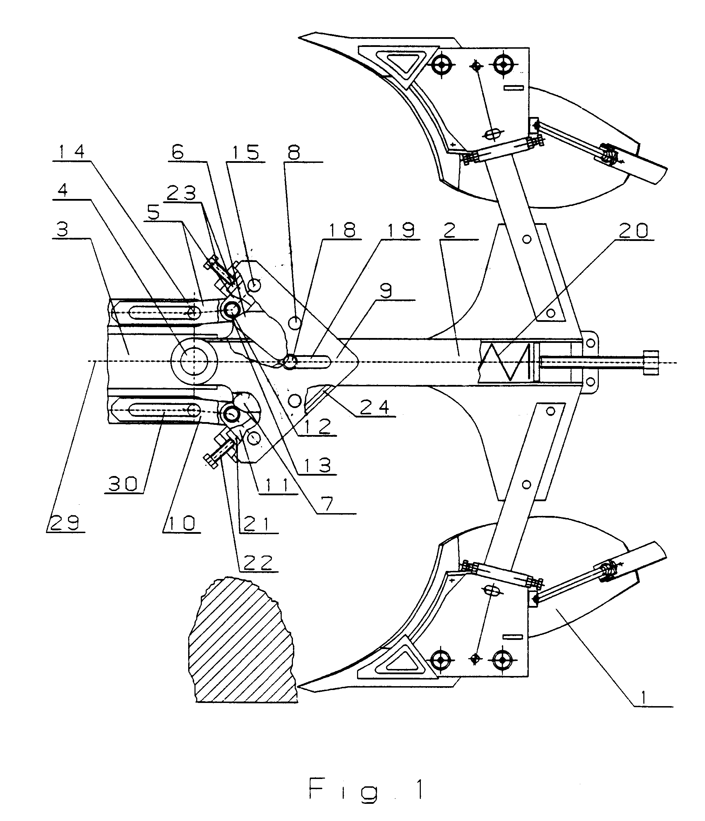

Beim Einsatz im Drehpflug wird die Überlastsicherung mit einem zweiten Kniehebelsystem 5 ausgestattet, welches spiegelbildlich zu der horizontalen Ebene 29 durch das Schwenkgelenk 4 des Grindels 2 angeordnet ist. Ebenfalls doppelt und spiegelbildlich zu dieser horizontalen Ebene 29 sind die Halte- und Stellvorrichtung 23 sowie die Abdeckung 24 angeordnet. Die vorderen Kniehebelarme 10 weisen jeweils ein Langloch 30 zur Aufnahme des Gelenkbolzens 14 am Pflugrahmen 3 auf (Fig. 1).

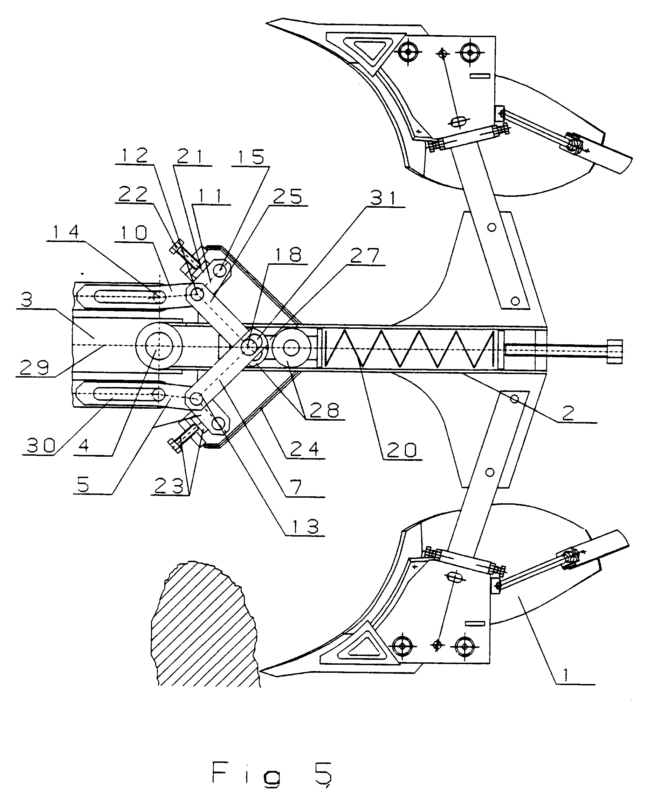

In dem bereits genannten zweiten Ausführungsbespiel sind die Druckstreben 25 beim Drehpflug mit jeweils einem Langloch 31 zur Aufnahme des Druckbolzens 18 versehen (Fig. 5).

In Arbeitsstellung ist der Pflugkörper 1 in seiner unteren Endstellung und der Grindel 2 wird über das Kniehebelsystem 5 bzw. dessen vordere Kniehebelarme 10 und den Gelenkbolzen 14 am Pflugrahmen 3 abgestützt. Dabei werden die vorderen Kniehebelarme 10 mittels des Kniegelenkbolzens 13 und der an der Halte- und Stellvorrichtung 23 anliegenden hinteren Kniehebelarme 11 gehalten. Die Einstellung der Endlage des Grindels 2 erfolgt durch eine Verstellung der Einstellschraube 22 (Fig. 1).

Stößt der Pflugkörper 1 auf ein Hindernis, so bewegt sich der Grindel 2 um sein Schwenkgelenk 4 nach oben. Gleichzeitig wird der Kniegelenkbolzen 13 durch die Wirkung der vorderen Kniehebelarme 10 auf einer durch die hinteren Kniehebelarme 11 vorgegebenen Bahn nach hinten bewegt. Dabei wird die Druckplatte 6 nach hinten gedrückt. Während dieser Bewegung gleitet der Kniegelenkbolzen 13 auf der Abrollfläche 16 der Druckplatte 6 ab, und diese verschiebt mit ihrer Abstützfläche 17 den Druckbolzen 18 in den Führungslanglöchern 19 ebenfalls nach hinten. Auf diese Weise wird die Druckfeder 20 zusammengedrückt.

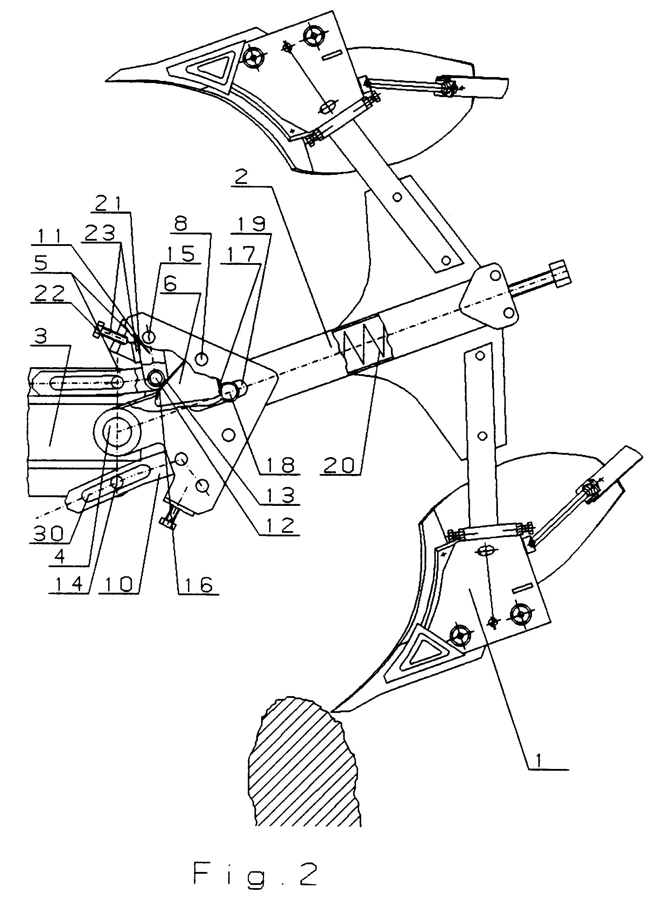

Nach Überwinden des Hindernisses drückt die Druckfeder 20 die Druckplatte 6, den Kniegelenkbolzen 13 und damit das Kniehebelsystem 5 in seine Endlage zurück und bringt somit den Pflugkörper 1 wieder in Arbeitsstellung (Fig. 2).

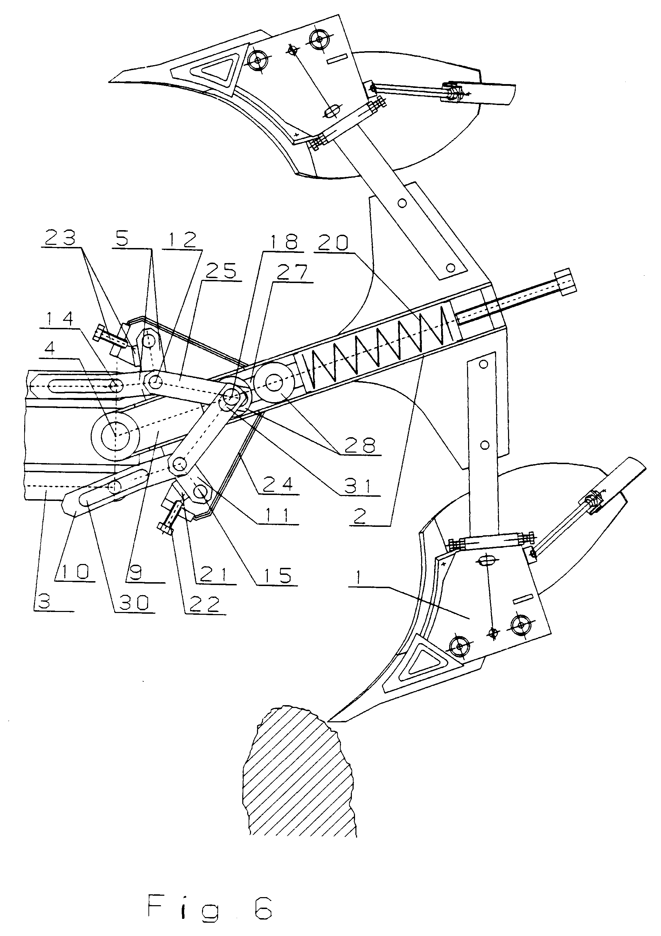

Beim Auslenken des Grindels 2 erfährt im zweiten Ausführungsbeispiel die Druckstrebe 25 über dem Kniegelenkbolzen 13 eine Bewegung nach hinten, welche auf den Wagen 27 übertragen wird. Dieser drückt die Druckfeder 20 zusammen. Infolge der bei dieser Variante im Grindel 2 stattfindenden Kraftübertragung mittels der Rollen 28 des Wagens 27 wird das erneute Einziehen des Pflugkörpers 1 in den Boden nach Überwinden des Hindernisses wesentlich erleichtert (Fig. 6).

Die Funktionsweise der Überlastsicherung beim Drehpflug ist im wesentlichen gleich der beim Beetflug. Um jedoch das Ausschwenken des Grindels 2 und damit des Pflugköpers 1 bei Überlastung zu gewährleisten, wird das jeweils untere Kniehebelsystem 5 durch ein entsprechendes Nachhintengleiten der vorderen Kniehebelarme 10 in den Langlöchern 30, geführt durch den Gelenkbolzen 14, fast gestreckt, währenddessen der Gelenkbolzen 14 der vorderen Kniehebelarme 10 des oberen Kniehebelsystems 5 in seiner hinteren Endlage in den Langlöchern 30 anliegt (Fig. 2, 6).

Um die mögliche Auslenkung des Grindels 2 bei Überlast weiter zu verbessern, wird diese Streckung des unteren Kniehebelsystems 5 beim zweiten Ausführungsbeispiel durch die Beweglichkeit seiner Druckstrebe 25 im Langloch 31 um den Druckbolzen 28 vergrößert (Fig. 6).

Zur Montage der Überlastsicherung wird die Druckfeder 20 von hinten und die Druckplatte 6 von vorn in den Grindel 2 eingeführt, bis beide am Druckbolzen 18 anliegen. Diese einfache Montagemöglichkeit ist auch beim Beetpflug im zweiten Ausführungsbeispiel durch die nach hinten offene Tasche 26 der Druckstrebe 25 gewährleistet.

### Aufstellung der verwendeten Bezugszeichen

- 1: Pflugkörper
- 2: Grindel
- 3: Pflugrahmen
- 4: Schwenkgelenk
- 5: Kniehebelsystem
- 6: Druckplatte
- 7: Kraftübertragungselement
- 8: Bolzen
- 9: Grindelkopf
- 10: Vorderer Kniehebelarm
- 11: Hinterer Kniehebelarm
- 12: Kniegelenk
- 13: Kniegelenkbolzen
- 14: Gelenkbolzen
- 15: Gelenkbolzen
- 16: Führungsbahn, Abrollfläche
- 17: Führungsbahn, Abstützfläche
- 18: Druckbolzen
- 19: Führungslangloch
- 20: Arbeitsspeicher, Druckfeder
- 21: Anschlag
- 22: Einstellschraube
- 23: Halte- und Stellvorrichtung
- 24: Abdeckung
- 25: Druckstrebe
- 26: Tasche
- 27: Wagen
- 28: Rollen
- 29: Horizontale Ebene
- 30: Langloch
- 31: Langloch

## Patentansprüche

1. Pflug mit einer Grindel-Überlastsicherung, bei dem der Grindel (2) rohrförmig ausgebildet ist und ein darin angeordneter Arbeitsspeicher (20) vorgesehen ist, mit einem zwischen Pflugrahmen (3) und Grindel (2) angelenkten Kniehebelsystem (5) und Bauelementen zur Kraftübertragung vom Arbeitsspeicher (20) auf ein Kniegelenk (12), wobei das Kniegelenk (12) aus zwei Kniehebelarmen (10, 11) und einem Kniegelenkbolzen (13) besteht, und mit einem Anschlag (21), der die Auslenkung des Grindels (2) nach unten begrenzt sowie mit einer EinStellvorrichtung für das Kniehebelsystem (5), **dadurch gekennzeichnet, daß** sowohl das Schwenkgelenk (4) des Grindels (2) am Pflugrahmen (3) als auch der Grindel (2) in einer gemeinsamen horizontalen Ebene (29) angeordnet sind, daß das Kniegelenk (12) des Kniehebelsystems (5) in Richtung des Grindels (2) ausschwenkbar ausgebildet ist, daß der Grindel (2) auf seiner dem Pflugrahmen (3) zugewandten Seite einen Grindelkopf (9) aufweist, daß am Grindel (2) eine Halte- und Stellvorrichtung (23) auf der dem Grindel (2) abgewandten Seite des am Grindelkopf (9) drehbar gelagerten hinteren Kniehebelarms (11) des Kniehebelsystems (5) vorgesehen ist, und daß ein Kraftübertragungselement (7, 25) zwischen dem Kniegelenkbolzen (13) und einem am Arbeitsspeicher (20) im Grindel (2) gelagerten Druckbolzen (18) angeordnet ist.

2. Pflug nach Anspruch 1, dadurch gekennzeichnet, daß das Kniehebelsystem (5) aus jeweils zwei paarweise nebeneinander angeordneten vorderen bzw. hinteren Kniehebelarmen (10,11) besteht, die mittels des Kniegelenkbolzens (13) kettengliedartig miteinander verbunden sind.

3. Pflug nach Anspruch 1 und 2, dadurch gekennzeichnet, daß die Halte- und Stellvorrichtung (23) aus einer am Grindelkopf (9) befestigten Einstellschraube (22) und einem am hinteren Kniehebelarm (11) angeordneten Anschlag (21) besteht, an dem die Einstellschraube (22) in Arbeitsstellung anliegt.

4. Pflug nach den Ansprüchen 1 bis 3, dadurch gekennzeichnet, daß am Grindelkopf (9) eine Abdeckung (24) für die beweglichen Teile der Überlastsicherung angeordnet ist.

5. Pflug nach den Ansprüchen 1 bis 4, dadurch gekennzeichnet, daß zwischen dem Kniegelenkbolzen (13) und dem Druckbolzen (18) eine um einen Bolzen (8) am Grindelkopf (9) pendelnd gelagerte Druckplatte (6) mit zwei sich etwa gegenüberliegenden Führungsbahnen (16, 17) angeordnet ist, an denen jeweils der Kniegelenkbolzen (13) bzw. der Druckbolzen (18) kraftschlüssig anliegen.

6. Pflug nach den Ansprüchen 1 bis 5, dadurch gekennzeichnet, daß beide Seiten des Grindels (2) jeweils ein Führungslangloch (19) zur Aufnahme des Druckbolzens (18) aufweisen.

7. Pflug nach den Ansprüchen 1 bis 4, dadurch gekennzeichnet, daß eine als Kraftübertragungselement (7) ausgebildete Druckstrebe (25) formschlüssig zwischen dem Kniegelenkbolzen (13) und dem Druckbolzen (18) angeordnet ist.

8. Pflug nach Anspruch 7, dadurch gekennzeichnet, daß im Grindel (2) zwischen dem Druckbolzen (18) und dem Arbeitsspeicher (20) ein Wagen (27) mit Rollen (28) angeordnet ist.

9. Pflug nach Anspruch 7 und 8, dadurch gekennzeichnet, daß die Druckstrebe (25) beim Beetpflug mit einer nach hinten offenen Tasche (26) versehen ist, in welcher der Druckbolzen (18) gelagert ist.

10. Pflug nach den Ansprüchen 1 bis 7, dadurch gekennzeichnet, daß beim Einsatz im Drehpflug alle beim Beetpflug oberhalb der horizontalen Ebene (29) durch das Schwenkgelenk (4) des Grindels (2) angeordneten Teile der Überlastsicherung doppelt und spiegelbildlich zu dieser horizontalen Ebene (29) angeordnet sind.

11. Pflug nach den Ansprüchen 1 bis 8 und 10, dadurch gekennzeichnet, daß die vorderen Kniehebelarme (10) beim Drehpflug jeweils ein Langloch (30) zur Aufnahme des Gelenkbolzens (14) am Pflugrahmen (3) aufweisen.

12. Pflug nach den Ansprüchen 7 und 8 sowie 10 und 11, dadurch gekennzeichnet, daß die Druckstreben (25) beim Drehpflug jeweils ein Langloch (31) zur Aufnahme des Druckbolzens (18) aufweisen.

## Claims

1. Plough with an overload safety device for a plough beam, wherein the plough beam (2) is constructed tube-like and a work storage (20) is provided therein, the plough having a toggle lever system linked between the plough frame (3) and the plough beam (2), and structural members for force transmission from the work storage onto a toggle joint (12), wherein the toggle joint consists of two toggle lever arms (10, 11) and a toggle joint pin (13), and a stop (21) which limits the excursion of the plough beam (2) in downward direction, and an adjusting device for the toggle lever system (5), **characterized in** that both the articulation (4) of the plough beam (2) on the plough frame (3) and the plough beam (2) are arranged in a common horizontal plane (29), that the toggle joint (12) of the toggle lever system (5) is constructed swinging out in the direction of the plough beam (2), that the plough beam (2) comprises, at its side directed towards the plough frame (3), a plough beam head (9), that a holding and adjusting device (23) is provided on the plough beam (2) at that side of the rear toggle lever arm (11) of the toggle lever system (5) rotatably mounted on the plough beam head (9) opposite to the plough beam (2), and that a force transmission element (7, 25) is arranged between the toggle joint pin (13) and a pressure bolt (18) supported on the work storage (20) in the plough beam (2).

2. Plough according to claim 1, **characterized in** that the toggle lever system (5) consists of two front and rear toggle lever arms (10, 11) arranged in pairs side by side and jointed like chain links by means of the toggle joint pin (13).

3. Plough according to claim 1 and 2, **characterized in** that the holding and adjusting device (23) consists of a adjusting screw (22) attached to the plough beam head (9) and a stop (21) arranged on the rear toggle lever arm (11) against which the adjusting screw (22) leans in working position.

4. Plough according to the claims 1 to 3, **characterized in** that a cover (24) for the moving parts of the overload safety device is arranged on the plough beam head (9).

5. Plough according to the claims 1 to 4, **characterized in** that a pressure plate (6) is arranged between the toggle joint pin (13) and the pressure bolt (18), the pressure plate (6) being pendulously mounted about a pin (8) on the plough beam head (9) and having two approximately opposing guide ways (16, 17) against which the toggle joint pin (13) and the pressure bolt (18), respectively, lean non-positively.

6. Plough according to the claims 1 to 5, **characterized in** that both sides of the plough beam (2) comprise a guiding slot (19) for receiving the pressure bolt (18).

7. Plough according to the claims 1 to 4, **characterized in** that a pressure stanchion (25) constructed as the force transmission element (25) is arranged positively between the toggle joint pin (13) and the pressure bolt (18).

8. Plough according to claim 7, **characterized in** that a carriage (27) with rolls (28) is arranged in the plough beam (2) between the pressure bolt (18) and the work storage (20).

9. Plough according to claim 7 and 8, **characterized in** that in a non-reversible plough the pressure stanchion (25) is provided with a rearwardly opened pocket (26) in which the pressure bolt (18) is supported.

10. Plough according to the claims 1 to 7, **characterized in** that in operation of a reversible plough all parts of the overload safety device arranged in a non-reversible plough above the horizontal plane (29) through the articulation (4) of the plough beam (2) are arranged twice and laterally reversed relative to this horizontal plane (29.

11. Plough according to the claims 1 to 8 and 10, **characterized in** that in a reversible plough each of the front toggle lever arms (10) comprises an elongated hole for receiving the joint pin on the plough frame (3).

12. Plough according to the claims 1 to 8 as well as 10 and 11, **characterized in** that in a reversible plough each of the pressure stanchions (25) comprises an elongated hole (31) for receiving the pressure bolt (18).

## Revendications

1. Charrue comportant une protection contre les surcharges de l'age, dans laquelle l'age (2) est tubulaire et un accumulateur de travail (20) est prévu, placé à l'intérieur, comportant une système à leviers coudés (5) articulés entra le cadre (3) de la charrue et l'age (2) ainsi que des éléments de contruction pour la transmission des forces de d'accumulateur de travail (20) à une articulation à genouillère (12), l'articulation à genouillère (12) étant constituée de deux bras de levier à genouillère (10, 11) et d'un axe d'articulation à genouillère (13), et comportant une butée (21) qui limite vers le bas la déviation de l'age (2) ainsi qu'un dispositif de réglage pour le système à laviers à genouillère (5), caractérisée en ce que l'articulation de pivotement (4) de l'age (2) sur le cadre (3) de la charrue de même que l'age (2) sont placés dans un plan horizontal (29) commun, en ce que l'articulatian à genouillère (12) du système à leviers à genouillère (5) peut pivoter an direction de l'age (2), en ce que l'age (2) présente, sur son côté tourné vers le cadre (3) de la charrue, une tête d'age (9), en ce qu'il est prévu sur l'age (2) un dispositif de retenue et de réglage (23) sur le côté, tourné à l'opposé de l'age (2), du bras de levier à genouillère (11) arrière, monté tournant sur la tête d'age (9), du système à leviers à genouillère (5), et en ce qu'un élément de transmission de force (7, 25) est placé entre l'axe d'articulation à genouillère (13) et un boulon de pression (18) monté sur l'accumulateur de travail (20), dans l'age (2).

2. Charrue selon la revendication 1, caractérisée en ce que le système à leviers à genouillère (5) est constitué de deux bras de levier à genouillère (10, 11) avant ou arrière, disposés côte à côte par paire, qui sont reliés entre eux à la manière de maillons de chaîne, au moyen de l'axe d'articulation à genouillère (13).

3. Charrue selon les revendications 1 et 2, caractérisée en ce que le dispositif de retenue et de réglage (23) est constitué d'une vis de réglage (22), fixée sur la tête d'age (9) et d'une butée (21), située sur le bras de levier à genouillère (11) arrière, contre laquelle la vis de réglage (22) s'applique en position de travail.

4. Charrue selon la revendication 1 à 3, caractérisée en ce que sur la tête d'age (9) est prévu un capot (24) pour les pièces mobiles de la protection contre les surcharges.

5. Charrue selon les revendications 1 à 4, caractérisée en ce qu'entre l'axe d'articulation à genouillère (13) et le boulon de pression (18) est prévue une plaque de pression (6), montée oscillante autour d'un axe (8), sur la tête d'age (9), avec deux voies de guidage (16, 17) se faisant face l'une l'autre, contre lesquelles s'applique par farce l'axe d'articulation à genouillère (13) ou le boulon de pression (18).

6. Charrue selon les revendications 1 à 5, caractérisée en ce que les deux côtés de l'age (2) présentent chacun un trou allongé de guidage (19) destiné à recevoir la boulon de pression (18).

7. Charrue selon les revendications 1 à 4, caractérisée en ce qu'une entretoise de pression (25), réalisée en tant qu'élément de transmission de force (7), est placée par concordance de forme entre l'axe d'articulation à genouillère (13) et le boulon de pression (18).

8. Charrue selon la revendication 7, caractérisée en ce que dans l'age (2) est prévu entre le boulon de pression (18) et l'accumulateur de travail (20), un chariot (27) à roulettes (28).

9. Charrue selon les revendications 7 et 8, caractérisée en ce que l'entretoise de pression (27), dans le cas d'une charrue ordinaire, est pourvue d'une poche (26) ouverte ver l'arrière, dans laquelle est monté le boulon de pression (18).

10. Charrue selon les revendications 1 à 7, caractérisée en ce que dans le cas d'une utilisation dans la charrue brabant, toutes les pièces de la protection contre les surcharges, placées dans la charrue ordinaire, au-dessus du plan horizontal (29) passant par l'articulation de pivotement (4) de l'age (2), sont en double et disposées dans une symétrie en miroir par rapport à ce plan horizontal (29).

11. Charrue selon les revendications 1 à 8 et 10, caractérisé a en ce que les bras de levier à genouillère avant (10) présentent chacun dans la charrue brabant un trou allongé (30) destiné à recevoir l'axe d'articulation (14) sur le cadre (3) de la charrue.

12. Charrue selon les revendications 7 et 8 ainsi que 10 et 11, caractérisée en ce que les entretoises de pression (25) présentent chacune dans la charrue brabant un trou allongé (31) destiné à recevoir le boulon de pression (18).
